# EUROPÄISCHE PATENTSCHRIFT

(11) **EP 1 134 255 B1**
(45) Veröffentlichungstag und Bekanntmachung des Hinweises auf die Patenterteilung: **15.01.2003**
(21) Anmeldenummer: 01102752.1
(22) Anmeldetag: 08.02.2001
(51) Int. Cl.: C08K 5/54, C08L 57/00, C08J 3/12, C04B 24/26

(54) **Polymerzusammensetzung zur Flexibilisierung von Baustoffmassen**
Polymer composition for the flexibilisation of construction materials
Composition polymerique pour flexibilisation de matériaux de construction

(30) Priorität: 06.03.2000 DE 10010860
(43) Veröffentlichungstag der Anmeldung: 19.09.2001
(73) Patentinhaber: Wacker-Chemie GmbH, 81737 München (DE)
(72) Erfinder: Eck, Herbert, Dr., 83646 Bad Tölz (DE); Adler, Klaus, Dr., 84489 Burghausen (DE); Lutz, Hermann, Dr., 84547 Emmerting (DE); Hopf, Heinrich, 84489 Burghausen (DE)
(74) Vertreter: Schuderer, Michael, Dr.

(56) Entgegenhaltungen:
- EP-A- 0 754 737
- CA-C- 1 340 267

## Beschreibung

Die Erfindung betrifft Polymerzusammensetzungen in Form deren wässrigen Dispersionen oder in Wasser redispergierbaren Pulver, Verfahren zu deren Herstellung sowie deren Verwendung zur Flexiblisierung von Baustoffmassen, insbesondere Dichtungsschlämmen.

Es ist bekannt, daß durch den Zusatz von wässrigen Dispersionen von thermoplastischen Kunststoffen die Dehnbarkeit von Baustoffen verbessert werden kann. Beispielsweise bestehen flexible Dichtungsschlämme, wie sie zur Abdichtung von Beton eingesetzt werden, aus Sand, Zement, Wasser und einem darin dispergierten thermoplastischen Polymer. Bisher wurde so vorgegangen, daß man eine Verbesserung der Elastizität über eine Veränderung der Polymerzusammensetzung der thermoplastischen Kunststoffe zu erreichen versuchte. In der WO-A 97/44289 wird gelehrt, zur Verbesserung der Flexibilisierung Copolymerisate auf der Basis von Vinylacetat-Ethylen-Copolymeren einzusetzen, welche einen Anteil an langkettigen, gegebenenfalls verzweigten, Vinylestern aufweisen. In der EP-A 857772 wird vorgeschlagen, zur Verbesserung des Rückstellvermögens von zementfreien Fugendichtungsmassen, diese mit einem Gemisch aus thermoplastischen Kunststoffen und Alkylalkoxysilanen zu modifizieren. In der EP-A 590660 wird gelehrt, die Hydrophobizität von zementfreien Dichtungsmassen durch Zusatz von thermoplastischem Polymer und verzweigten Organopolysiloxanen zu verbessern.

Der Erfindung lag die Aufgabe zugrunde, eine Polymerzusammensetzung zu entwickeln, mit der man unabhängig von der Zusammensetzung des thermoplastischen Polymers eine wirksame Flexibilisierung von Baustoffmassen, insbesondere von zementhaltigen Baustoffmassen erhält.

Gegenstand der Erfindung ist eine Polymerzusammensetzung zur Flexibilisierung von Baustoffmassen, in Form deren wässrigen Dispersion oder in Wasser redispergierbaren Pulvers, enthaltend
a) mindestens ein in Wasser unlösliches, filmbildendes Polymerisat aus einem oder mehreren radikalisch polymerisierbaren, ethylenisch ungesättigten Monomeren,
b) mindestens eine Verbindung aus der Gruppe der wasserlöslichen Polymerisate aus einem oder mehreren radikalisch polymerisierbaren, ethylenisch ungesättigten Monomeren, und der ionischen und nichtionischen Emulgatoren, und
c) ein Gemisch aus mindestens zwei Organosiliciumverbindungen, von denen mindestens eine eine in Salzform vorliegende, aminfunktionelle Organosiliciumverbindung ist.

Geeignete in Wasser unlösliche, filmbildende Polymerisate enthalten eine oder mehrere Monomereinheiten aus der Gruppe der Vinylester von unverzweigten oder verzweigten Alkylcarbonsäuren mit 1 bis 15 C-Atomen, der Methacrylsäureester und Acrylsäureester von unverzweigten oder verzweigten Alkoholen mit 1 bis 12 C-Atomen, der Diene wie Butadien oder Isopren, der Olefine wie Ethen oder Propen, der Vinylaromaten wie Styrol, Methylstyrol, Vinyltoluol, der Vinylhalogenide wie Vinylchlorid. Unter wasserunlöslich ist dabei zu verstehen, daß die Löslichkeit der Polymerisate unter Normalbedingungen weniger als 1 g pro Liter Wasser beträgt. Für die Filmbildung wird im allgemeinen die Polymerzusammensetzung so gewählt, daß bei der Verarbeitungstemperatur Filmbildung erfolgt, vorzugsweise so, daß eine Glasübergangstemperatur Tg von -30°C bis +80°C resultiert.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielweise VeoVa9 oder VeoVa10 (Handelsnamen der Fa. Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester; sowie Maleinsäureanhydrid; ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Weitere Beispiele sind siliciumfunktionelle Comonomere, wie Acryloxypropyltri (alkoxy) - und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können.

Als Komponente a) werden bevorzugt:
Aus der Gruppe der Vinylester-Polymerisate Vinylacetat-Polymerisate;
Vinylester-Ethylen-Copolymere wie Vinylacetat-Ethylen-Copolymere mit einem Ethylengehalt von vorzugsweise 1 bis 60 Gew.-%;
Vinylester-Ethylen-Vinylchlorid-Copolymere mit einem Ethylengehalt von vorzugsweise 1 bis 40 Gew.-% und einem Vinylchlorid-Gehalt von vorzugsweise 20 bis 90 Gew.-%, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester, enthalten sind;
Vinylacetat-Copolymere mit vorzugsweise 1 bis 50 Gew.-% eines oder mehrerer copolymerisierbarer Vinylester wie Vinyllaurat, Vinylpivalat, Vinyl-2-ethylhexansäureester, Vinylester einer alpha-verzweigten Carbonsäure, insbesonders Versaticsäure-Vinylester (VeoVa9^{R}, VeoVa10^{R}), welche gegebenenfalls noch 1 bis 40 Gew.-% Ethylen enthalten;
Vinylester-Acrylsäureester-Copolymerisate mit vorzugsweise 30 bis 90 Gew.-% Vinylester, insbesonders Vinylacetat, und vorzugsweise 1 bis 60 Gew.-% Acrylsäureester, insbesonders n-Butylacrylat oder 2-Ethylhexylacrylat, welche gegebenenfalls noch 1 bis 40 Gew.-% Ethylen enthalten;
Vinylester-Acrylsäureester-Copolymerisate mit vorzugsweise 30 bis 75 Gew.-% Vinylacetat, 1 bis 30 Gew.-% Vinyllaurat oder Vinylester einer alpha-verzweigten Carbonsäure, insbesonders Versaticsäure-Vinylester, vorzugsweise 1 bis 30 Gew.-% Acrylsäureester, insbesonders n-Butylacrylat oder 2-Ethylhexylacrylat, welche gegebenenfalls noch 1 bis 40 Gew.-% Ethylen enthalten.

Aus der Gruppe der (Meth)acrylsäurepolymerisate Polymerisate von n-Butylacrylat oder 2-Ethylhexylacrylat; Copolymerisate von Methylmethacrylat mit n-Butylacrylat und/oder 2-Ethylhexylacrylat.
Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylat-Copolymere.
Aus der Gruppe der Styrol-Polymerisate Styrol-1,3-Butadien-Copolymere und Styrol-Acrylsäureester-Copolymere wie Styrol-Methylmethacrylat-n-Butylacrylat, Styrol-n-Butylacrylat oder Styrol-2-Ethylhexylacrylat mit einem Styrol-Gehalt von vorzugsweise jeweils 1 bis 70 Gew.-%.

Als Komponente b) werden vorzugsweise wasserlösliche Schutzkolloide eingesetzt, welche gegebenenfalls mit Hydroxylgruppen, Mercaptogruppen, Carboxylgruppen, Amingruppen oder Carbonylgruppen funktionalisiert sind. Unter wasserlöslich ist dabei zu verstehen, daß die Löslichkeit bei Normalbedingungen mehr als 10 g pro Liter Wasser beträgt. Geeignete Schutzkolloide sind im Handel erhältlich. Beispiele für geeignete Schutzkolloide sind Polyvinylalkohole mit einem Gehalt von 75 bis 100 Mol-%, bevorzugt 78 bis 95 Mol-%, Vinylalkoholeinheiten und einem Molekulargewicht von vorzugsweise 5000 bis 200000; Polyvinylpyrrolidone mit einem K-Wert von 10 bis 120; Polysaccharide in wasserlöslicher Form wie Stärken (Amylose. und Amylopectin), Cellulosen und deren Carboxymethyl-, Methyl-, Hydroxyethyl-, Hydroxypropyl-Derivate; Proteine wie Casein, Sojaprotein, Gelatine; Ligninsulfonate; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Soweit die funktionellen Gruppen nicht ohnehin schon in den Schutzkolloiden enthalten sind, können letztere auch nachträglich funktionalisiert werden. Mit Mercaptogruppen, Carboxylgruppen, Amingruppen oder Carbonylgruppen funktionalisierte Polyvinylalkohole sind auch durch Copolymerisation entsprechend funktionalisierter Comonomere mit Vinylacetat und anschließender Hydrolyse in dem Fachmann bekannter Weise zugänglich.

Als Komponente b) geeignete Emulgatoren sind ionische oder nichtionische Emulgatoren oder deren Gemische, beispielweise:
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl- bzw. Alkylarylrest und 1 bis 50 EO-Einheiten.
4) Alkylpolyglykolether bevorzugt mit 8 bis 40 EO-Einheiten und Alkylresten mit 8 bis 20 C-Atomen.
5) Alkylarylpolyglykolether bevorzugt mit 8 bis 40 EO-Einheiten und 8 bis 20 C-Atomen in den Alkyl- und Arylresten.
6) Ethylenoxid/Propylenoxid (EO/PO)-Blockcopolymere bevorzugt mit 8 bis 40 EO- bzw. PO-Einheiten.

Als Komponente b) besonders bevorzugt werden die genannten Polyvinylalkohole, Stärken, Cellulosen, Casein, Melaminformaldehydsulfonate, Naphthalinformaldehydsulfonate, sowie aus der Gruppe der funktionalisierten Schutzkolloide, die mit Carboxylgruppen, Acetoacetylgruppen oder Aminogruppen funktionalisierten Polyvinylalkohole, und die Carboxymethyl-substituierten Stärken und Cellulosen.

Die Polymerzusammensetzung enthält im allgemeinen 1 bis 50 Gew.-%, vorzugsweise 5 bis 30 Gew.-% der Komponente b), bezogen auf Komponente a).

Bei den als Komponente c) geeigneten Organosiliciumverbindungen handelt es sich um Verbindungen aus Einheiten der allgemeinen Formel (I) R¹ₐ(OR²)_{b}SiO_{(4-a-b)/2} worin R¹ ein Wasserstoff oder ein einwertiger, gegebenenfalls mit Halogenatomen, insbesondere mit Aminogruppen, substituierter Kohlenwasserstoffrest ist; R² ein Wasserstoff, Alkalimetallatom oder einwertiger gegebenenfalls mit Halogenatomen, insbesondere mit Aminogruppen, substituierter Kohlenwasserstoffrest ist, a den Wert 0 bis 4 und b den Wert 0 bis 4 bedeutet, mit der Maßgabe, daß die Summe aus a und b kleiner oder gleich 4 ist. Es handelt sich dabei um Silane, wenn a + b = 4; um Organopolysiloxane, wenn a + b ≤ 3; um Kieselsäureester, wenn a = 0.

Beispiele für den gegebenenfalls substituierten Kohlenwasserstoffrest R¹ sind Kohlenwasserstoffreste mit 1 bis 20 Kohlenstoffatomen, wobei Kohlenwasserstoffreste mit 1 bis 8 Kohlenstoffatomen, insbesondere der Methyl-, Ethyl- und der Isooctylrest, besonders bevorzugt sind.

Beispiele für aminosubstituierte Kohlenwasserstoffreste R¹ sind solche, deren Amino-Substituenten die allgemeine Formel (II) R³₂NR⁴- aufweisen, worin R³ Wasserstoff oder einwertiger, gegebenenfalls aminosubstituierter Kohlenwasserstoffrest mit 1 bis 20, insbesondere mit 1 bis 8 Kohlenstoffatomen,bedeutet und R⁴ ein zweiwertiger Kohlenwasserstoffrest mit 1 bis 20, insbesondere mit 1 bis 8 Kohlenstoffatomen, bedeutet. Beispiele für Rest R³ sind die für Rest R¹ gegebenen Beispiele für Kohlenwasserstoffreste sowie mit Aminogruppen substituierte Kohlenwasserstoffreste, wie Aminoalkylreste, wobei der Aminoethylrest besonders bevorzugt ist. Vorzugsweise ist an jedes Stickstoffatom in den Resten der allgemeinen Formel (II) mindestens ein Wasserstoffatom gebunden.

Bevorzugt handelt es sich bei Rest R⁴ um zweiwertige Kohlenwasserstoffreste mit 1 bis 10 Kohlenstoffatomen, besonders bevorzugt 1 bis 4 Kohlenstoffatomen, insbesondere um den n-Propylenrest. Beispiele für Rest R⁴ sind der Methylen-, Ethylen-, Propylen-, Butylen-, Cyclohexylen-, Octadecylen-, Phenylen- und Butenylenrest.

Beispiele für aminosubstituierte Kohlenwasserstoffreste R¹ sind H₂N(CH₂)₃-, H₂N(CH₂)₂NH(CH₂)₂-, H₂N(CH₂)₂NH(CH₂)₃-, H₂N(CH₂)₂-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- und (C₂H₅)₂N(CH₂)₂-.

Beispiele für einwertigen gegebenenfalls mit Aminogruppen substituierten Kohlenwasserstoffrest R² sind die vorstehend für R¹ angegebenen Beispiele. Bevorzugte Kohlenwasserstoffreste R² sind Alkylreste mit 1 bis 20 Kohlenstoffatomen, wobei Alkylreste mit 1 bis 8 Kohlenstoffatomen, insbesondere der Methyl-, Ethyl-, Propyl- und der Isooctylrest, besonders bevorzugt sind.

Bevorzugte siliciumorganische Verbindungen sind Alkalisiliconate aus 1 bis 5 Einheiten der allgemeinen Formel (I), in denen R¹ einen gegebenenfalls mit Aminogruppen substituierten Alkylrest mit 1 bis 6 Kohlenstoffatomen, insbesondere Methyl-, Ethyl-, n-Propyl- und Isopropylrest bedeutet, R² Wasserstoff, Natrium oder Kalium bedeutet, und a den Wert 1 oder 2, vorzugsweise 1 und b den Wert 1, 2 oder 3 bedeutet und 30 bis 70 Mol-% der Reste R² Natrium oder Kalium sind.

Bevorzugte Silane der allgemeinen Formel (I) sind solche, bei denen R¹ ein einwertiger, vorzugsweise mit Aminogruppen substituierter, Kohlenwasserstoffrest mit 1 bis 15 Kohlenstoffatomen ist, R² ein Alkylrest mit 1 bis 6 Kohlenstoffatomen, insbesondere Methyl-, Ethyl-, n-Propyl- und Isopropylrest bedeutet, und a 1 oder 2, vorzugsweise 1 und b 2 oder 3, vorzugsweise 3 bedeutet. Besonders bevorzugt sind N-(2-Aminoethyl)-3-aminopropylmethyldimethoxysilan, N-(2-Aminoethyl)-3-aminopropyltrimethoxysilan, i-Octyltrimethoxysilan und i-Octyltriethoxysilan.

Bevorzugte siliciumorganische Verbindungen sind auch Kieselsäureester der allgemeinen Formel (I), in der a den Wert 0 hat. Bevorzugte Kieselsäureester enthalten Alkoxyreste mit 1 bis 3 Kohlenstoffatomen und weisen eine Viskosität von 1 bis 5 mm²/s bei 25°C auf. Beispiele bevorzugter Kieselsäureester sind Tetramethylsilikat, Tetraethylsilikat und Tetraisopropylsilikat.

Bevorzugte Beispiele für Organosiloxane der allgemeinen Formel (I) sind Organopolysiloxane wie Methylethoxypolysiloxane, vorzugsweise der Summenformel CH₃Si(OC₂H₅)_{0.8}O_{1.1}, Phenylethoxypolysiloxane, vorzugsweise mit der Summenformel C₆H₅Si(OC₂H₅)_{0.72}O_{1.14} und i-Octylmethoxypolysiloxane, vorzugsweise mit der Summenformel (C₈H₁₇SiO_{3/2})(CH₃SiO_{3/2})_{1.8}(CH₃O_{1/2})_{3.4}, wobei solche mit einer Viskosität von 5 bis 500 mm²/s bei 25°C besonders bevorzugt sind.

Weitere bevorzugte Beispiele für Organosiloxane der allgemeinen Formel (I) sind verzweigte Organosiloxane, die als Reste R¹ ausschließlich Alkylreste mit 1 bis 12 Kohlenstoffatomen enthalten. Weitere bevorzugte Beispiele für Organosiloxane der allgemeinen Formel (I) sind Organosiloxanharze. Vorzugsweise hat a dann einen Wert von 0.8 bis 1.8, insbesondere von 1.0 bis 1.7; b hat dann vorzugsweise einen Wert von 0 bis 0.5 und die Summe von a+b hat maximal einen Wert von 1.9. Ein bevorzugtes Beispiel für ein Organosiloxanharz ist das Harz der Summenformel MeSiO_{1.48}(OEt)_{0.04}.

Bevorzugte Beispiele für aminofunktionelle Organosiloxane der allgemeinen Formel (I) sind Organopolysiloxane der allgemeinen Formel (III) R⁵_{c}R⁶_{d}(OR⁷)ₑSiO_{(4-c-d-e)/2}, worin R⁵ ein einwertiger Kohlenwasserstoffrest mit 1 bis 10 Kohlenstoffatomen ist, R⁶ ein einwertiger aminosubstituierter Kohlenwasserstoffrest mit 1 bis 10 Kohlenstoffatomen ist, R⁷ ein einwertiger Alkylrest mit 1 bis 6 Kohlenstoffatomen ist, und c = 0 bis 3, d = = bis 3, e = 0 bis 3, mit der Maßgabe, daß d durchschnittlich mindestens 0.05 ist, die Summe aus c, d und e kleiner oder gleich 3 ist und der Rest R⁶ in Mengen von mehr als 0.5 Gewichtsprozent basischem Stickstoff pro Organopolysiloxanmolekül vorhanden ist. Beispiele für Kohlenwasserstoffreste R⁵ und aminosubstituierte Kohlenwasserstoffreste R⁶ und bevorzugte Kohlenwasserstoffreste R⁵ und aminosubstituierte Kohlenwasserstoffreste R⁶ sind vorstehend für die Reste R¹ und R² aufgeführt.

Die aminosubstituierten Organosiliciumverbindungen werden in Salzform eingesetzt. Zur Herstellung des Salzes sind alle wasserlöslichen organischen und anorganischen Säuren geeignet. Beispiele für derartige Säuren sind Salz-, Schwefel-, Phosphor-, Essig- und Propionsäure. Essigsäure und Propionsäure sind bevorzugt.

Die aminosubstituierten Organosiliciumverbindungen enthalten im allgemeinen 0.1 bis 1.0 Gew.-%, vorzugsweise 0.2 bis 0.6 Gew.-% Stickstoff, jeweils bezogen auf das Gesamtgewicht der aminosubstituierten Organosiliciumverbindung. Der Anteil der Komponente c) in der Polymerzusammensetzung beträgt 0.1 bis 10 Gew.-%, vorzugsweise 0.5 bis 5 Gew.-%, jeweils bezogen auf das Gesamtgewicht der Polymerzusammensetzung, mit der Maßgabe, daß der Gehalt an aminosubstituierten Organosilicumverbindung so hoch ist, daß die Stickstoffmenge nicht unter 0.1 Gew.-%, bezogen auf das Gesamtgewicht der Komponente c), fällt.

Die Herstellung der wasserunlöslichen Polymerisate a) erfolgt vorzugsweise mit dem Emulsionspolymerisationsverfahren. Dieses wird im offenen Reaktionsgefäß oder in Druckgefäßen, in einem Temperaturbereich von 0°C bis 100°C durchgeführt und mittels der gebräuchlichen Radikalbildner, die vorzugsweise in Mengen von 0.01 bis 3.0 Gew.-%, bezogen auf das Gesamtgewicht der Monomeren, eingesetzt werden, eingeleitet. Die Herstellung wird vorzugsweise in Gegenwart der obengenannten Schutzkolloide durchgeführt. Gegebenenfalls können bei der Emulsionspolymerisation die obengenannten Emulgatoren eingesetzt werden. In einer bevorzugten Ausführungsform wird ohne Zusatz von Emulgator polymerisiert. Der für die Polymerisation gewünschte pH-Bereich liegt im allgemeinen zwischen 2.5 und 10, vorzugsweise 3 und 8. Zur Molekulargewichtseinstellung können bei der Polymerisation die üblicherweise verwendeten Regler zugesetzt werden. Die Polymerisation kann, unabhängig vom gewählten Polymerisationsverfahren, diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Der Festgehalt der so erhältlichen Dispersion beträgt 20 bis 70 %. Die mittlere Teilchengröße beträgt 0.1 bis 10 µm, vorzugsweise 0.2 bis 5 µm.

Die Trocknung der Dispersion kann mittels Sprühtrocknung, Gefriertrocknung oder Wirbelschichttrocknung erfolgen. Bevorzugt wird die Sprühtrocknung in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 65°C bis 90°C, je nach Anlage, Tg des Harzes und gewünschtem Trocknungsgrad gewählt. Zur Sprühtrocknung wird die Dispersion des Polymerisats a) mit einem Festgehalt von vorzugsweise 20 % bis 60 % gemeinsam mit Schutzkolloiden als Verdüsungshilfe versprüht und getrocknet. Als Schutzkolloide können dabei die obengenannten wasserlöslichen Polymere b) eingesetzt werden, wobei die Schutzkolloide der wässrigen Dispersion vor dem Sprühtrocknen, in Form einer wässrigen Lösung, zugegeben werden können. Bevorzugt werden bei diesem Verfahrensschritt 5 bis 20 Gew.-% wasserlösliches Polymer b), bezogen auf Polymer a), zugesetzt.

Zur Herstellung der Polymerzusammensetzung können die genannten wasserlöslichen Polymere b) während der Polymerisation des Polymeren a) als Schutzkolloide zugegeben werden, oder vor der Verdüsung der wässrigen Dispersion des Polymers a) als Verdüsungshilfe zugegeben werden, oder teilweise während der Polymerisation und der Rest vor der Verdüsung zugegeben werden. Die genannten, als Komponente b) geeigneten Emulgatoren werden im allgemeinen während der Polymerisation des Polymeren a) zugegeben.

Die Organosiliciumkomponente c) kann zur wässrigen Dispersion enthaltend die Komponenten a) und b) zugegeben werden, und zum Erhalt einer pulverförmigen Polymerzusammensetzung diese Mischung getrocknet werden. Es kann auch so vorgegangen werden, daß die Organosiliciumverbindung mit einem pulverförmigen Trägermaterial vermischt und getrocknet wird, und dieses Pulver mit den Komponenten a) und b) vermischt wird. Die Organosiliciumkomponente c) kann auch mit einer wässrigen Lösung der wasserlöslichen Polymere b) gemischt werden, anschließend verdüst werden und schließlich mit der Komponente a) vermischt werden.

Gegebenenfalls kann die Polymerzusammensetzung noch mit weiteren Zusatzstoffen modifiziert werden. Beispiele hierfür sind Antiblockmittel, Farbstoffe, Pigmente, Weichmacher, Verfilmungshilfsmittel, Antischaummittel, Katalysatoren, Rheologiehilfsmittel, Verdickungsmittel, Haftmittel umd Emulgatoren.

Die Polymerzusammensetzung kann in den dafür typischen Anwendungsbereichen eingesetzt werden. Beispielsweise in bauchemischen Produkten in Verbindung mit anorganischen, hydraulisch abbindenden Bindemitteln wie Zement, Gips, Wasserglas. Weitere Beispiele sind die Verwendung in zementhaltigen und zementfreien Bauklebern, Putzen, Spachtelmassen, Fußbodenspachtelmassen, Fugenmörtel und Farben.

Besonders bevorzugt ist die Verwendung der Polymerzusammensetzung in zementären Dichtungsschlämmen. Eine für Dichtungsschlämme typische Trockenformulierung ist beispielsweise:
10 bis 50 Gew.Teile Zement,
10 bis 50 Gew.Teile Quarzsand,
1.0 bis 10 Gew.Teile Fasern,
0.1 bis 1.0 Gew.Teile Zementverflüssiger,
0.1 bis 1.0 Gew.Teile Entschäumer.

Die Polymerzusammensetzung wird vorzugsweise in einer Menge von 10 bis 50 Gew.-%, bezogen auf Gesamtgewicht der Trockenformulierung, eingesetzt. Der gebrauchsfertige Dichtungsschlamm wird durch Anrühren mit Wasser hergestellt, wobei die Wassermenge vorzugsweise so bemessen wird, daß 25 bis 60 Gew.-Teile Wasser auf 100 Gew.-Teile Trockenformulierung eingesetzt werden. Wird die Polymerzusammensetzung in Form einer wässrigen Dispersion verwendet, kann die Dispersion mit den in der Bauindustrie üblichen Zwangsmischern zur Mörtelmischung zugemischt werden. Zweckmäßig geht man so vor, daß die Dispersion mit der erforderlichen Menge Anmachwasser verdünnt wird und der Mischung aus Zement und Zuschlagstoffen sowie gegebenenfalls weiteren Zusatzstoffen zugegeben wird. Bei der Verwendung in Form eines Pulvers wird die pulverförmige Polymerzusammensetzung mit den Bestandteilen der Trockenformulierung vermischt und dieses Gemisch mit der berechneten Menge an Anmachwasser angerührt.

Mit der erfindungsgemäßen Polymerzusammensetzung wurde überraschenderweise gefunden, daß aufgrund des Anteils an aminofunktioneller Organosiliciumverbindung nicht nur eine Hydrophobierung der damit modifizierten Massen erhalten wird, sondern insbesondere bei der Anwendung in Dichtungsschlämmen eine erhebliche Verbesserung der elastischen Eigenschaften erhalten wird, wobei vor allem die erhöhte Dehnbarkeit nach Naßlagerung hervorzuheben ist.

Die nachfolgenden Beispiele dienen der weiteren Erläuterung der Erfindung:

Komponente a) und Komponente b) wurden in Form folgender Substrate eingesetzt:

### Dispersion 1:

Wässrige Dispersion mit einem Festgehalt von 50.0 Gew.-% eines Vinylacetat-Ethylen-Copolymerisats mit 75 Gew.-% Vinylacetat und 25 Gew.-% Ethylen und einer T_{g} von -7°C, welche noch 5 Gew.-% Polyvinylalkohol mit einem Hydrolysegrad von 88 % und einer Höppler-Viskosität von 4 mPas (4 %-ige Lösung in Wasser bei 20°C) enthalten hat.

### Dispersion 2:

Wässrige Dispersion mit einem Festgehalt von 50 Gew.-% eines Vinylacetat-Ethylen-VeoVa10-Copolymerisats mit einer T_{g} von 15°C, welche noch 3.5 Gew.-% Polyvinylalkohol mit einem Hydrolysegrad von 88 % und einer Höppler-Viskosität von 4 mPas (4 %-ige Lösung in Wasser bei 20°C) enthalten hat.

### Dispersion 3:

Wässrige Dispersion mit einem Festgehalt von 50 Gew.-% eines Styrol-n-Butylacrylat-Copolymerisats mit 31 Gew.-% Styrol und 69 Gew.-% n-Butylacrylat und einer Tg von -5°C, welche noch 3.5 Gew.-% Nonylphenolether/Nonylphenolethersulfonat-Emulgator enthalten hat.

### Dispersionspulver 4:

Zur Herstellung des Dispersionspulvers wurden zu der obengenannten Dispersion 2 10 Gew.-%, bezogen auf Polymerisat, eines Polyvinylalkohols mit einem Hydrolysegrad von 88 Mol-% und einer Höppler-Viskosität von 8 mPas zugegeben. Die Mischung wurde durch eine Zweistoffdüse versprüht.

### Organosiliciumkomponente 1 (SSK 1)

Ein Gemisch aus 500 g eines α,ω-Dihydroxydimethylpolysiloxans (MG: 4000 g/mol) und 150 g N-(2-Aminoethyl)-3-aminopropyltrimethoxysilan wurde zusammen mit 0.2 g KOH in 4 g Methanol für 6 Stunden zum Sieden erhitzt, anschließend gekühlt und bei Raumtemperatur mit 2.5 ml 10 %-iger HCl versetzt. Anschließend wurde das Methanol abdestilliert und das entstandene KCl abfiltriert. Der Stickstoffgehalt betrug 2.9 Gew.-%. 50 g des so erhaltenen Aminosiloxans wurden mit 352 g iso-Octyltrimethoxysilan, 22.5 g Essigsäure sowie 225 g hochdisperser Kieselsäure vermischt.

### Organosiliciumkomponente 2 (SSK 2)

Ein Gemisch aus 500 g eines α,ω-Dihydroxydimethylpolysiloxans (MG: 4000 g/mol) und 150 g N-(2-Aminoethyl)-3-aminopropyltrimethoxysilan wurde zusammen mit 0.2 g KOH in 4 g Methanol für 6 Stunden zum Sieden erhitzt, anschließend gekühlt und bei Raumtemperatur mit 2.5 ml 10 %-iger HCl versetzt. Anschließend wurde das Methanol abdestilliert und das entstandene KCl abfiltriert. Der Stickstoffgehalt betrug 2.9 Gew.-%.
50 g des so erhaltenen Aminosiloxans wurden mit 95 g iso-Octyltrimethoxysilan, 16 g Methyltrimethoxysilan, 28 g Tetraethoxysilan und 13 g Essigsäure vermischt.

Die Polymerzusammensetzungen wurden in folgender Rezeptur für Dichtungsschlämme getestet:

| | |
|---|---|
| 150.0 Gew.-Teile | Portlandzement (CEM I 32.5 R) |
| 40.0 Gew.-Teile | Verdickungsmittel (Tixoton CV 15) |
| 10.5 Gew.-Teile | Entschäumer (Agitan P 800) |
| 260.0 Gew.-Teile | Füllstoff (Quarzsand Nr.12) |
| 10.0 Gew.-Teile | Füllstoff (Glimmer 2002) |
| 208.0 Gew.-Teile | CaCO₃-Füllstoff (Omyacarb 20 BG) |
| 1.0 Gew.-Teile | Cellulose-Verdicker (Culminal MC 3000) |
| 0.5 Gew.-Teile | Stärke-Verdicker (Amylotex 8100) |
| 20.0 Gew.-Teile | Cellulose-Faser (Arbocel B 00) |

Die Polymerzusammensetzung wurde durch Vermischen der in Tabelle 1 angegebenen Dispersionen bzw. Dispersionspulver und der Organosiliciumkomponente erhalten. Die Polymerzusammensetzung wurde anschließend mit den in Tabelle 1 angegebenen Mengen der Dichtungsschlamm-Rezeptur und Wasser vermischt. Nach 10 Minuten Reifezeit wurde der Mörtel 30 Sekunden gemischt und dann mittels Traufel in einer Teflonschablone zu einer 2 mm dicken Dichtschlämme aufgezogen, nach dem Trocknen aus der Schablone entfernt und dann entsprechend der Angaben in Tabelle 1 gelagert.
Nach der Lagerung wurden aus den Dichtschlämmen Schulterstege ausgestanzt von denen in einem Zugversuch nach DIN 53504 auf einer Instron-Zugmaschine bei einer Zuggeschwindigkeit von 10 mm/min Reißfestigkeit RF (N/mm²) und Reißdehnung RD (%) bestimmt wurden. Die Mittelwerte der einzelnen Meßreihen sind in Tabelle 1 angegeben.
d = Lagerzeit in Tagen; NK = Normklimalagerung bei 23°C, 50 % rel. Luftfeuchtigkeit.

**Tabelle 1:**

| Versuch | V 1 | V 2 | V 3 | V 4 | V 5 | V 6 | V 7 |
|---|---|---|---|---|---|---|---|
| Grundmischung [g] | 1000 | 1000 | 1000 | 1000 | 1000 | 1000 | 1000 |
| Dispersion 1 [g] | 400 | 390 | | | | | |
| Dispersion 2 [g] | | | 400 | 395 | | | 390 |
| Dispersion 3 [g] | | | | | 400 | 390 | |
| SSK 1 [g] | | 10 | | | | | 10 |
| SSK 2 [g] | | | | 5 | | 10 | |
| Wasser [g] | 120 | 120 | 180 | 180 | 180 | 180 | 180 |
| 28d/NK RF in N/mm² | 1.2 | 1.3 | 0.7 | 0.7 | 1.1 | 2.5 | 0.8 |
| 28d/NK RD in % | 5.7 | 17.9 | 17.4 | 34.1 | 8.3 | 15.0 | 47.1 |

In den Versuchen V 1, V 3 und V 5 wurden jeweils Dichtungsschlamm-Zusammensetzungen getestet, welche nur mit Komponente a) und b) der Polymerzusammensetzung modifiziert worden sind. Die Versuche V 2, V 4, V 6 und V 7 zeigen die Ergebnisse, welche man bei Modifizierung mit der Polymerzusammensetzung umfassend die Komponenten a), b) und c) erhält:
Unter Aufrechterhaltung der mechanischen Festigkeit (Reißfestigkeit RF) wird die Elastizität (Reißdehnung RD) um ein Vielfaches verbessert.

## Patentansprüche

1. Polymerzusammensetzung zur Flexibilisierung von Baustoffmassen, in Form deren wässrigen Dispersion oder in Wasser redispergierbaren Pulvers, enthaltend
a) mindestens ein in Wasser unlösliches, filmbildendes Polymerisat aus einem oder mehreren radikalisch polymerisierbaren, ethylenisch ungesättigten Monomeren,
b) mindestens eine Verbindung aus der Gruppe der wasserlöslichen Polymerisate aus einem oder mehreren radikalisch polymerisierbaren, ethylenisch ungesättigten Monomeren, und der ionischen und nichtionischen Emulgatoren, und
c) ein Gemisch aus mindestens zwei Organosiliciumverbindungen, von denen mindestens eine eine in Salzform vorliegende, aminfunktionelle Organosiliciumverbindung ist.

2. Polymerzusammensetzung nach Anspruch 1, **dadurch gekennzeichnet, daß** als in Wasser unlösliche, filmbildende Polymerisate a) solche enthalten sind, welche eine oder mehrere Monomereinheiten aus der Gruppe der Vinylester von unverzweigten oder verzweigten Alkylcarbonsäuren mit 1 bis 15 C-Atomen, der Methacrylsäureester und Acrylsäureester von unverzweigten oder verzweigten Alkoholen mit 1 bis 12 C-Atomen, der Diene, der Olefine, der Vinylaromaten, der Vinylhalogenide enthalten, wobei die Löslichkeit der Polymerisate unter Normalbedingungen weniger als 1 g pro Liter Wasser beträgt.

3. Polymerzusammensetzung nach Anspruch 1 bis 2, **dadurch gekennzeichnet, daß** als Komponente b) wasserlösliche Schutzkolloide enthalten sind, welche gegebenenfalls mit Hydroxylgruppen, Mercaptogruppen, Carboxylgruppen, Amingruppen oder Carbonylgruppen funktionalisiert sind, und deren Löslichkeit bei Normalbedingungen mehr als 10 g pro Liter Wasser beträgt.

4. Polymerzusammensetzung nach Anspruch 3, **dadurch gekennzeichnet, daß** als Schutzkolloide ein oder mehrere aus der Gruppe umfassend Polyvinylalkohole mit einem Gehalt von 75 bis 100 Mol-% Vinylalkoholeinheiten, Polyvinylpyrrolidone mit einem K-Wert von 10 bis 120, Polysaccharide in wasserlöslicher Form, Cellulosen und deren Carboxymethyl-, Methyl-, Hydroxyethyl-, Hydroxypropyl-Derivate, Proteine, Ligninsulfonate, Poly(meth)acrylsäure, Poly(meth)acrylamid, Polyvinylsulfonsäuren und deren wasserlöslichen Copolymere, Melaminformaldehydsulfonate, Naphthalinformaldehydsulfonate, Styrolmaleinsäure- und Vinylethermaleinsäure-Copolymere enthalten sind.

5. Polymerzusammensetzung nach Anspruch 1 bis 2, **dadurch gekennzeichnet, daß** als Komponente b) ionische oder nichtionische Emulgatoren oder deren Gemische enthalten sind.

6. Polymerzusammensetzung nach Anspruch 1 bis 5, **dadurch gekennzeichnet, daß** als Komponente c) Organosiliciumverbindungen enthalten sind, aus Einheiten der allgemeinen Formel (I) R¹ₐ(OR²)_{b}SiO_{(4-a-b)/2}, worin R¹ ein Wasserstoff oder ein einwertiger, gegebenenfalls mit Halogenatomen oder mit Aminogruppen, substituierter Kohlenwasserstoffrest ist, R² ein Wasserstoff, Alkalimetallatom oder einwertiger gegebenenfalls mit Halogenatomen oder mit Aminogruppen, substituierter Kohlenwasserstoffrest ist, a den Wert 0 bis 4 und b den Wert 0 bis 4 bedeutet, mit der Maßgabe, daß die Summe aus a und b kleiner oder gleich 4 ist.

7. Polymerzusammensetzung nach Anspruch 6, **dadurch gekennzeichnet, daß** die aminosubstituierte Kohlenwasserstoffreste R¹ und R² solche sind, deren Amino-Substituenten die allgemeine Formel (II) R³₂NR⁴- aufweisen, worin R³ Wasserstoff oder einwertiger, gegebenenfalls aminosubstituierter Kohlenwasserstoffrest mit 1 bis 20 Kohlenstoffatomen bedeutet und R⁴ ein zweiwertiger Kohlenwasserstoffrest mit 1 bis 20 Kohlenstoffatomen bedeutet.

8. Polymerzusammensetzung nach Anspruch 7, **dadurch gekennzeichnet, daß** die aminosubstituierten Kohlenwasserstoffreste R¹ solche sind aus der Gruppe umfassend H₂N(CH₂)₃-, H₂N(CH₂)₂NH(CH₂)₂-, H₂N(CH₂)₂NH(CH₂)₃-, H₂N(CH₂)₂-, H₃CNH(CH₂)₃-, C₂H₅NH(CH₂)₃-, H₃CNH(CH₂)₂-, C₂H₅NH(CH₂)₂-, H₂N(CH₂)₄-, ₂N(CH₂)₅-H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (C₃H₂)N(CH₂)₂-, (C₂H₅)₂N(CH₂)₃- und (C₂H₅)₂N(CH₂)₂-.

9. Polymerzusammensetzung nach Anspruch 6 bis 8, **dadurch gekennzeichnet, daß** als Organosiliciumverbindung Alkalisiliconate aus 1 bis 5 Einheiten der allgemeinen Formel (I) enthalten sind, in denen R¹ einen gegebenenfalls aminosubstituierten Alkylrest mit 1 bis 6 Kohlenstoffatomen bedeutet, R² Wasserstoff, Natrium oder Kalium bedeutet, und a den Wert 1 oder 2, und b den Wert 1, 2 oder 3 bedeutet, und 30 bis 70 Mol-% der Reste R² Natrium oder Kalium sind.

10. Polymerzusammensetzung nach Anspruch 6 bis 8, **dadurch gekennzeichnet, daß** als Organosiliciumverbindung Silane der allgemeinen Formel (I) enthalten sind, bei denen R¹ ein einwertiger, gegebenenfalls mit Aminogruppen substituierter, Kohlenwasserstoffrest mit 1 bis 15 Kohlenstoffatomen ist, R² einen Alkylrest mit 1 bis 6 Kohlenstoffatomen bedeutet, und a 1 oder 2 und b 2 oder 3 bedeutet.

11. Polymerzusammensetzung nach Anspruch 10, **dadurch gekennzeichnet, daß** ein oder mehrere Organosiliciumverbindungen aus der Gruppe umfassend N-(2-Aminoethyl)-3-aminopropylmethyldimethoxysilan, N-(2-Aminoethyl)-3-aminopropyltrimethoxysilan, i-Octyltrimethoxysilan und i-Octyltriethoxysilan enthalten sind.

12. Polymerzusammensetzung nach Anspruch 6 bis 8, **dadurch gekennzeichnet, daß** als Organosiliciumverbindung Kieselsäureester der allgemeinen Formel (I) enthalten sind, in der a den Wert 0 hat.

13. Polymerzusammensetzung nach Anspruch 6, **dadurch gekennzeichnet, daß** als Organosiliciumverbindung solche aus der Gruppe umfassend Methylethoxypolysiloxane der Summenformel CH₃Si(OC₂H₅)_{0.8}O_{1.1}, Phenylethoxypolysiloxane der Summenformel C₆H₅Si(OC₂H₅)_{0.72}O_{1.14} und i-Octylmethoxypolysiloxane der Summenformel (C₈H₁₇SiO_{3/2}) (CH₃SiO_{3/2})_{1.8}x(CH₃O_{1/2})_{3.4} enthalten sind.

14. Polymerzusammensetzung nach Anspruch 6, **dadurch gekennzeichnet, daß** als Organosiliciumverbindung solche aus der Gruppe umfassend verzweigte Organosiloxane, die als Reste R¹ ausschließlich Alkylreste mit 1 bis 12 Kohlenstoffatomen enthalten, und Organosiloxanharze mit a = 0.8 bis 1.8, b = 0 bis 0.5 und a + b ≤ 1.9, enthalten sind.

15. Polymerzusammensetzung nach Anspruch 6 bis 8, **dadurch gekennzeichnet, daß** als Organosiliciumverbindung aminofunktionelle Organosiloxane der allgemeinen Formel (III) R⁵_{c}R⁶_{d}(OR⁷)ₑSiO_{(4-c-d-e)/2} enthalten sind, worin R⁵ ein einwertiger Kohlenwasserstoffrest mit 1 bis 10 Kohlenstoffatomen ist, R⁶ ein einwertiger aminosubstituierter Kohlenwasserstoffrest mit 1 bis 10 Kohlenstoffatomen ist, R⁷ ein einwertiger Alkylrest mit 1 bis 6 Kohlenstoffatomen ist, und c = 0 bis 3, d = 0 bis 3, e = 0 bis 3, mit der Maßgabe, daß d durchschnittlich mindestens 0.05 ist, die Summe aus c, d und e kleiner oder gleich 3 ist und der Rest R⁶ in Mengen von mehr als 0.5 Gewichtsprozent basischem Stickstoff pro Organopolysiloxanmolekül vorhanden ist.

16. Polymerzusammensetzung nach Anspruch 1 bis 15, **dadurch gekennzeichnet, daß** der Anteil der Komponente b) in der Polymerzusammensetzung 5 bis 50 Gew.-%, bezogen auf die Komponete a) beträgt, und der Anteil der Komponente c) in der Polymerzusammensetzung 0.1 bis 10 Gew.-%, bezogen auf das Gesamtgewicht der Polymerzusammensetzung beträgt, mit der Maßgabe, daß der Gehalt an aminosubstituierten Organosilicumverbindung so hoch ist, daß die Stickstoffmenge nicht unter 0.1 Gew.-%, bezogen auf das Gesamtgewicht der Komponente c) fällt.

17. Verfahren zur Herstellung der Polymerzusammensetzung nach Anspruch 1 bis 16 wobei die wasserlöslichen Polymere b) während der Polymerisation des Polymeren a) als Schutzkolloide zugegeben werden, oder vor der Verdüsung der wässrigen Dispersion des Polymers a) als Verdüsungshilfe zugegeben werden, oder teilweise während der Polymerisation und der Rest vor der Verdüsung zugegeben werden, oder die als Komponente b) geeigneten Emulgatoren während der Polymerisation des Polymeren a) zugegeben werden.

18. Verfahren nach Anspruch 18 wobei die Organosiliciumkomponente c) zu einer wässrigen Dispersion enthaltend die Komponenten a) und b) zugegeben wird, und zum Erhalt einer pulverförmigen Polymerzusammensetzung diese Mischung getrocknet wird, oder die Organosiliciumkomponente c) mit einem pulverförmigen Trägermaterial vermischt und getrocknet wird, und dieses Pulver mit den Komponenten a) und b) vermischt wird, oder die Organosiliciumkomponente c) mit einer wässrigen Lösung des wasserlöslichen Polymers b) gemischt wird, anschließend verdüst wird und schließlich mit der Komponente a) vermischt wird.

19. Verwendung der Polymerzusammensetzung nach Anspruch 1 bis 16 in bauchemischen Produkten.

20. Verwendung nach Anspruch 19 in Verbindung mit anorganischen, hydraulisch abbindenden Bindemitteln wie Zement, Gips, Wasserglas.

21. Verwendung nach Anspruch 19 und 20 in zementhaltigen und zementfreien Bauklebern, Putzen, Spachtelmassen, Fußbodenspachtelmassen, Fugenmörtel und Farben.

22. Verwendung nach Anspruch 19 und 20 in zementären Dichtungsschlämmen.

23. Verwendung nach Anspruch 22 in einer Trockenformulierung enthaltend 10 bis 50 Gew.Teile Zement, 10 bis 50 Gew.Teile Quarzsand, 1.0 bis 10 Gew.Teile Fasern, 0.1 bis 1.0 Gew.Teile Zementverflüssiger, 0.1 bis 1.0 Gew.Teile Entschäumer.

24. Verwendung nach Anspruch 23, wobei die Polymerzusammensetzung in einer Menge von 10 bis 50 Gew.-%, bezogen auf Gesamtgewicht der Trockenformulierung, verwendet wird.

## Claims

1. Polymer composition for flexibilizing building materials, in the form of their aqueous dispersion or of powder redispersible in water, containing
a) at least one water-insoluble, film-forming polymer of one or more ethylenically unsaturated monomers capable of free radical polymerization,
b) at least one compound from the group consisting of the water-soluble polymers of one or more ethylenically unsaturated monomers capable of free radical polymerization, and the ionic and nonionic emulsifiers, and
c) a mixture of at least two organosilicon compounds, at least one of which is an amino-functional organosilicon compound present in salt form.

2. Polymer composition according to Claim 1, **characterized in that** the water-insoluble, film-forming polymers a) present are those which contain one or more monomer units from the group consisting of the vinyl esters of straight-chain or branched alkanecarboxylic acids having 1 to 15 C atoms, the methacrylates and acrylates of straight-chain or branched alcohols having 1 to 12 C atoms, the dienes, the olefins, the vinylaromatics and the vinyl halides, the solubility of the polymers under standard conditions being less than 1 g per litre of water.

3. Polymer composition according to either of Claims 1 and 2, **characterized in that** water-soluble protective colloids which, if required, are functionalized with hydroxyl groups, mercapto groups, carboxyl groups, amino groups or carbonyl groups and whose solubility under standard conditions is more than 10 g per litre of water are present as component b).

4. Polymer composition according to Claim 3, **characterized in that** the protective colloids present are one or more from the group consisting of polyvinyl alcohols containing from 75 to 100 mol % of vinyl alcohol units, polyvinylpyrrolidones having a K value of from 10 to 120, polysaccharides in water-soluble form, celluloses and their carboxymethyl, methyl, hydroxyethyl and hydroxypropyl derivatives, proteins, ligninsulphonates, poly(meth)acrylic acid, poly(meth)acrylamide, polyvinylsulphonic acids and their water-soluble copolymers, melamine/formaldehyde sulphonates, naphthalene formaldehyde sulphonates and styrene/maleic acid and vinyl ether/maleic acid copolymers.

5. Polymer composition according to either of Claims 1 and 2, **characterized in that** ionic or nonionic emulsifiers or mixtures thereof are present as component b).

6. Polymer composition according to any of Claims 1 to 5, **characterized in that** organosilicon compounds comprising units of the general formula (I) R¹ₐ(OR²)_{b}SiO_{(4-a-b)/2}, in which R¹ is hydrogen or a monovalent hydrocarbon radical optionally substituted by halogen atoms or by amino groups, R² is hydrogen, an alkali metal atom or a monovalent hydrocarbon radical optionally substituted by halogen atoms or by amino groups, a has the value 0 to 4 and b has the value 0 to 4, with the proviso that the sum of a and b is less than or equal to 4, are present as component c).

7. Polymer composition according to Claim 6,
**characterized in that** the amino-substituted hydrocarbon radicals R¹ and R² are those whose amino substituents have the general formula (II) R³₂NR⁴-, where R³ is hydrogen or a monovalent, optionally amino-substituted hydrocarbon radical having 1 to 20 carbon atoms and R⁴ is a divalent hydrocarbon radical having 1 to 20 carbon atoms.

8. Polymer composition according to Claim 7, **characterized in that** the amino-substituted hydrocarbon radicals R¹ are those from the group consisting of H₂N(CH₂)₃-, H₂N(CH₂)₂NH(CH₂)₂-, H₂N(CH₂)₂NH(CH₂)₃-, H₂N(CH₂)₂-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- and (C₂H₅)₂N(CH₂)₂-.

9. Polymer composition according to any of Claims 6 to 8, **characterized in that** alkali metal siliconates comprising 1 to 5 units of the general formula (I), in which R¹ is an optionally amino-substituted alkyl radical having 1 to 6 carbon atoms, R² is hydrogen, sodium or potassium and a has the value 1 or 2 and b has the value 1, 2 or 3, and from 30 to 70 mol % of the radicals R² are sodium or potassium, are present as the organosilicon compound.

10. Polymer composition according to any of Claims 6 to 8, **characterized in that** silanes of the general formula (I), in which R¹ is a monovalent hydrocarbon radical optionally substituted by amino groups and having 1 to 15 carbon atoms, R² is an alkyl radical having 1 to 6 carbon atoms and a is 1 or 2 and b is 2 or 3, are present as the organosilicon compound.

11. Polymer composition according to Claim 10, **characterized in that** one or more organosilicon compounds from the group consisting of N-(2-aminoethyl)-3-aminopropylmethyldimethoxysilane, N- (2-aminoethyl)-3-aminopropyltrimethoxysilane, isooctyltrimethoxysilane and isooctyltriethoxysilane are present.

12. Polymer composition according to any of Claims 6 to 8, **characterized in that** silicic acid esters of the general formula (I), in which a has the value 0, are present as the organosilicon compound.

13. Polymer composition according to Claim 6, **characterized in that** the organosilicon compound present is one from the group consisting of methylethoxypolysiloxanes of the empirical formula CH₃Si(OC₂H₅)_{0.8}O_{1.1}, phenylethoxypolysiloxanes of the empirical formula C₆H₅Si(OC₂H₅)_{0.72}O_{1.14} and isooctylmethoxypolysiloxanes of the empirical formula (C₈H₁₇SiO_{3/2}) (CH₃SiO_{3/2})_{1.8}x(CH₃O_{1/2})_{3.4}.

14. Polymer composition according to Claim 6, **characterized in that** the organosilicon compound present is one from the group consisting of branched organosiloxanes which contain, as radicals R¹, exclusively alkyl radicals having 1 to 12 carbon atoms, and organosiloxane resins where a = 0.8 to 1.8, b = 0 to 0.5 and a + b ≤ 1.9.

15. Polymer composition according to any of Claims 6 to 8, **characterized in that** aminofunctional organosiloxanes of the general formula (III) R⁵_{c}R⁶_{d}(OR⁷)ₑSiO_{(4-c-d-e)/2}, in which R⁵ is a monovalent hydrocarbon radical having 1 to 10 carbon atoms, R⁶ is a monovalent amino-substituted hydrocarbon radical having 1 to 10 carbon atoms, R⁷ is a monovalent alkyl radical having 1 to 6 carbon atoms and c = 0 to 3, d = 0 to 3 and e = 0 to 3, with the proviso that d is on average at least 0.05, the sum of c, d and e is less than or equal to 3 and the radical R⁶ is present in amounts corresponding to more than 0.5% by weight of basic nitrogen per organopolysiloxane molecule, are present as the organosilicon compound.

16. Polymer composition according to any of Claims 1 to 15, **characterized in that** the amount of component b) in the polymer composition is from 5 to 50% by weight, based on component a), and the amount of component c) in the polymer composition is from 0.1 to 10% by weight, based on the total weight of the polymer composition, with the proviso that the content of amino-substituted organosilicon compound is so high that the amount of nitrogen does not fall below 0.1% by weight, based on the total weight of component c).

17. Process for the preparation of the polymer composition according to any of Claims 1 to 16, the water-soluble polymers b) being added as protective colloids in the polymerization of the polymer a), or being added as an atomizing aid before the spraying of the aqueous dispersion of the polymer a), or some of them being added during the polymerization and the remainder before the spraying, or the emulsifiers suitable as component b) being added during the polymerization of the polymer a).

18. Process according to Claim 18, the organosilicon component c) being added to an aqueous dispersion containing the components a) and b), and this mixture being dried in order to obtain a pulverulent powder composition, or the organosilicon component c) being mixed with a pulverulent carrier material and being dried, and this powder being mixed with the components a) and b), or the organosilicon component c) being mixed with an aqueous solution of the water-soluble polymer b), then being sprayed and finally being mixed with the component a).

19. Use of the polymer composition according to any of Claims 1 to 16 in chemical products for the construction industry.

20. Use according to Claim 19 in combination with inorganic, hydraulically setting binders, such as cement, gypsum or waterglass.

21. Use according to Claims 19 and 20 in cement-containing and cement-free construction adhesives, renders, filling compounds, floor filling compounds, joint mortars and paints.

22. Use according to Claims 19 and 20 in cement-containing sealing slurries.

23. Use according to Claim 22 in a dry formulation containing from 10 to 50 parts by weight of cement, from 10 to 50 parts by weight of quartz sand, from 1.0 to 10 parts by weight of fibres, from 0.1 to 1.0 part by weight of cement plasticizer and from 0.1 to 1.0 part by weight of antifoam.

24. Use according to Claim 23, the polymer composition being used in an amount of from 10 to 50% by weight, based on the total weight of the dry formulation.

## Revendications

1. Composition polymère pour la flexibilisation de matériaux de construction, sous forme de leurs dispersions aqueuses ou de poudres redispersables dans l'eau, comprenant
a) au moins un polymère filmogène insoluble dans l'eau, d'un ou de plusieurs monomères éthyléniquement insaturés polymérisables par voie radicalaire,
b) au moins un composé parmi le groupe constitué des polymères hydrosolubles d'un ou de plusieurs monomères éthyléniquement insaturés polymérisables par voie radicalaire, et des émulsifiants ioniques et non ioniques, et
c) un mélange d'au moins deux composés organosiliciés, parmi lesquels au moins l'un est un composé organosilicié à fonction amine, se trouvant sous forme de sel.

2. Composition polymère selon la revendication 1, **caractérisée en ce que** les polymères filmogènes insolubles dans l'eau a) présents sont ceux qui renferment un ou plusieurs motifs monomère parmi le groupe constitué des esters vinyliques d'acides alkylcarboxyliques non ramifiés ou ramifiés ayant de 1 à 15 atomes de carbone, des esters méthacryliques et des esters acryliques d'alcools non ramifiés ou ramifiés ayant de 1 à 12 atomes de carbone, des diènes, des oléfines, des composés vinylaromatiques et des halogénures de vinyle, la solubilité des polymères étant inférieure à 1 g par litre d'eau dans des conditions normales.

3. Composition polymère selon les revendications 1 à 2, **caractérisée en ce que** des colloïdes protecteurs hydrosolubles, qui sont éventuellement fonctionnalisés par des groupes hydroxy, des groupes mercapto, des groupes carboxy, des groupes amine ou des groupes carbonyle, et dont la solubilité est supérieure à 10 g par litre d'eau dans des conditions normales, sont présents en tant que composant b).

4. Composition polymère selon la revendication 3, **caractérisée en ce que** les colloïdes protecteurs présents sont un ou plusieurs parmi le groupe constitué d'alcools polyvinyliques présentant une teneur de 75 à 100 % en moles de motifs alcool vinylique, de polyvinylpyrrolidones présentant une valeur de K de 10 à 120, de polysaccharides sous forme hydrosoluble, de celluloses et de leurs dérivés carboxyméthyliques, méthyliques, hydroxyéthyliques et hydroxypropyliques, de protéines, de lignosulfonates, de l'acide poly(méth)acrylique, du poly(méth)acrylamide, d'acides polyvinylsulfoniques et de leurs copolymères hydrosolubles, de sulfonates de mélamine/formaldéhyde, de sulfonates de naphtalène/formaldéhyde, et de copolymères styrène/acide maléique et éther vinylique/acide maléique.

5. Composition polymère selon les revendications 1 à 2, **caractérisée en ce que** des émulsifiants ioniques ou non ioniques ou leurs mélanges sont présents en tant que composant b).

6. Composition polymère selon les revendications 1 à 5, **caractérisée en ce qu'**elle comprend, en tant que composant c), des composés organosiliciés à base de motifs de formule générale (I) R¹ₐ(OR²)_{b}SiO_{(4-a-b)/2}, dans laquelle R¹ représente un hydrogène ou un radical hydrocarboné monovalent, éventuellement substitué par des atomes d'halogène ou par des groupes amino, R² représente un hydrogène, un atome de métal alcalin ou un radical hydrocarboné monovalent, éventuellement substitué par des atomes d'halogène ou par des groupes amino, a vaut de 0 à 4 et b vaut de 0 à 4, à condition que la somme de a et b soit inférieure ou égale à 4.

7. Composition polymère selon la revendication 6, **caractérisée en ce que** les radicaux hydrocarbonés R¹ et R² amino-substitués sont ceux dont les substituants amino sont de formule générale (II) R³₂NR⁴-, dans laquelle R³ représente un hydrogène ou un radical hydrocarboné monovalent éventuellement amino-substitué, renfermant de 1 à 20 atomes de carbone, et R⁴ représente un radical hydrocarboné bivalent renfermant de 1 à 20 atomes de carbone.

8. Composition polymère selon la revendication 7, **caractérisée en ce que** les radicaux hydrocarbonés R¹ amino-substitués sont ceux parmi le groupe constitué de H₂N(CH₂)₃-, H₂N(CH₂)₂NH(CH₂)₂-, H₂N(CH₂)₂NH(CH₂)₃-, H₂N(CH₂)₂-, H₃CNH(CH₂)₃-, C₂H₅NH(CH₂)₃-, H₃CNH(CH₂)₂-, C₂H₅NH(CH₂)₂-, H₂N(CH₂)₄-, ₂N(CH₂)₅-H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- et(C₂H₅)₂N(CH₂)₂-.

9. Composition polymère selon les revendications 6 à 8, **caractérisée en ce qu'**elle comprend, en tant que composé organosilicié, des siliconates de métaux alcalins à base de 1 à 5 motifs de formule générale (I), dans laquelle R¹ représente un radical alkyle éventuellement amino-substitué, renfermant de 1 à 6 atomes de carbone, R² représente un hydrogène, un sodium ou un potassium, et a vaut 1 ou 2, et b vaut 1, 2 ou 3, et de 30 à 70 % en moles des radicaux R² sont un sodium ou un potassium.

10. Composition polymère selon les revendications 6 à 8, **caractérisée en ce qu'**elle comprend, en tant que composé organosilicié, des silanes de formule générale (I) dans laquelle R¹ représente un radical hydrocarboné monovalent, éventuellement substitué par des groupes amino, et renfermant de 1 à 15 atomes de carbone, R² représente un radical alkyle renfermant de 1 à 6 atomes de carbone, et a vaut 1 ou 2 et b vaut 2 ou 3.

11. Composition polymère selon la revendication 10, **caractérisée en ce qu'**elle comprend un ou plusieurs composés organosiliciés parmi le groupe constitué du N-(2-aminoéthyl)-3-aminopropylméthyldiméthoxysilane, du N-(2-aminoéthyl)-3-aminopropyltriméthoxysilane, de l'iso-octyltriméthoxysilane et de l'iso-octyltriéthoxysilane.

12. Composition polymère selon les revendications 6 à 8, **caractérisée en ce qu'**elle comprend, en tant que composé organosilicié, des esters de l'acide silicique de formule générale (I), dans laquelle a vaut 0.

13. Composition polymère selon la revendication 6, **caractérisée en ce qu'**elle comprend, en tant que composé organosilicié, ceux parmi le groupe constitué de méthyléthoxypolysiloxanes de formule brute CH₃Si(OC₂H₅)_{0,8}O_{1,1}, de phényléthoxypolysiloxanes de formule brute C₆H₅Si(OC₂H₅)_{0,72}O_{1,14} et d'iso-octylméthoxypolysiloxane de formule brute (C₈H₁₇SiO_{3/2}) (CH₃SiO_{3/2})_{1,8} x(CH₃O_{1/2})_{3,4}.

14. Composition polymère selon la revendication 6, **caractérisée en ce qu'**elle comprend, en tant que composé organosilicié, ceux parmi le groupe constitué d'organosiloxanes ramifiés renfermant, en tant que radicaux R¹, exclusivement des radicaux alkyle renfermant de 1 à 12 atomes de carbone, et de résine d'organosiloxanes pour lesquelles a = de 0,8 à 1,8, b = de 0 à 0,5 et a + b ≤ 1,9.

15. Composition polymère selon les revendications 6 à 8, **caractérisée en ce qu'**elle comprend, en tant que composé organosilicié, des organosiloxanes à fonction amino de formule générale (III) R⁵_{c}R⁶_{d}(OR⁷)ₑSiO_{(4-c-d-e)/2} dans laquelle R⁵ représente un radical hydrocarboné monovalent renfermant de 1 à 10 atomes de carbone, R⁶ représente un radical hydrocarboné monovalent amino-substitué, renfermant de 1 à 10 atomes de carbone, R⁷ représente un radical alkyle monovalent renfermant de 1 à 6 atomes de carbone, et c = de 0 à 3, d = de 0 à 3, e = de 0 à 3, à condition que d vale en moyenne au moins 0,05, la somme de c, d et e soit inférieure ou égale à 3 et le radical R⁶ soit présent en quantités supérieures à 0,5 pour cent en poids d'azote basique par molécule d'organopolysiloxane.

16. Composition polymère selon les revendications 1 à 15, **caractérisée en ce que** la proportion du composant b) dans la composition polymère est de 5 à 50 % en poids, par rapport au composant a), et la proportion du composant c) dans la composition polymère est de 0,1 à 10 % en poids, par rapport au poids total de la composition polymère, à condition que la teneur en composé organosilicié amino-substitué soit suffisamment élevée pour que la quantité d'azote ne soit pas inférieure à 0,1 % en poids, par rapport au poids total du composant c).

17. Procédé de préparation de la composition polymère selon les revendications 1 à 16, dans lequel les polymères hydrosolubles b) sont ajoutés durant la polymérisation du polymère a) en tant que colloïdes protecteurs, ou sont ajoutés avant la pulvérisation de la dispersion aqueuse du polymère a) en tant qu'auxiliaires de pulvérisation, ou sont ajoutés en partie durant la polymérisation et le reste avant la pulvérisation, ou les émulsifiants appropriés en tant que composant b) sont ajoutés durant la polymérisation du polymère a).

18. Procédé selon la revendication 18, dans lequel le composant organosilicié c) est ajouté à une dispersion aqueuse comprenant les composants a) et b), et ce mélange est séché en vue d'obtenir une composition polymère pulvérulente, ou le composant organosilicié c) est mélangé avec un matériau de support pulvérulent et séché, et cette poudre est mélangée avec les composants a) et b), ou le composant organosilicié c) est mélangé avec une solution aqueuse du polymère hydrosoluble b), puis est pulvérisé et enfin mélangé avec le composant a) .

19. Utilisation de la composition polymère selon les revendications 1 à 16 dans des produits chimiques de construction.

20. Utilisation selon la revendication 19 en association avec des liants inorganiques à prise hydraulique, tels que le ciment, le gypse et le verre soluble.

21. Utilisation selon les revendications 19 et 20 dans des adhésifs de construction contenant du ciment et exempts de ciment, des crépis, des mastics, des mastics pour planchers, des mortiers de joints et des peintures.

22. Utilisation selon les revendications 19 et 20 dans des boues d'étanchéité cimentaires.

23. Utilisation selon la revendication 22 dans une formulation sèche comprenant de 10 à 50 parties en poids de ciment, de 10 à 50 parties en poids de sable de quartz, de 1,0 à 10 parties en poids de fibres, de 0,1 à 1,0 partie en poids de fluidifiant pour ciment, de 0,1 à 1,0 partie en poids d'anti-mousse.

24. Utilisation selon la revendication 23, dans laquelle la composition polymère est utilisée en une quantité de 10 à 50 % en poids, par rapport au poids total de la formulation sèche.
